Europäisches Patentamt

(19) European Patent Office

Office européen des brevets

(11) Numéro de publication: **0 008 561**
**B1**

(12) **FASCICULE DE BREVET EUROPEEN**

(45) Date de publication du fascicule du brevet:
06.10.82

(51) Int. Cl.³: **F 27 D 1/16** // C25C3/08

(21) Numéro de dépôt: **79420038.6**

(22) Date de dépôt: **13.08.79**

(54) *Appareillage pour compacter les pâtes carbonées dans les garnissages de fours métallurgiques.*

(30) Priorité: **16.08.78 FR 7824423**

(43) Date de publication de la demande:
**05.03.80 Bulletin 80/5**

(45) Mention de la délivrance du brevet:
**06.10.82 Bulletin 82/40**

(84) Etats contractants désignés:
**AT DE GB NL SE**

(56) Documents cités:
**DE-B-1 069 885**
**FR-A-2 379 640**
**US-A-2 728 105**
**US-A-3 497 017**

(73) Titulaire: **ALUMINIUM PECHINEY, 28, rue de Bonnel, F-69433 Lyon Cedex 3 (FR)**

(72) Inventeur: **Sulmont, Benoît, 4, rue Omerou-Asmprax-Spitia, Paralia Distomon (GR)**
Inventeur: **Hudault, Gérard, Echaillon, F-73300 St. Jean de Maurienne (FR)**

(74) Mandataire: **Pascaud, Claude, PECHINEY UGINE KUHLMANN 28, rue de Bonnel, F-69003 Lyon (FR)**

BUNDESDRUCKEREI BERLIN

Appareillage pour compacter les pâtes carbonées dans les garnissages de fours métallurgiques

La présente invention concerne un appareillage pour le compactage des pâtes carbonées dans les garnissages de fours métallurgiques et électrométallurgiques, et, en particulier, pour le compactage des joints lors de l'assemblage de blocs de carbone ou de graphite constituant le garnissage de cellules pour la production d'aluminium par électrolyse d'alumine dissoute dans de la cryolithe fondue, dont ils constituent la cathode.

Dans tout ce qui suit, on désignera par »pâtes carbonées«, des pâtes constituées d'un agrégat au moins en partie carboné et d'un liant, et par »pâte de brasque« une pâte carbonée essentiellement constituée de coke et de brai.

Les pâtes de brasques usuelles, que ce soit pour constituer des joints ou des éléments de garnissage, sont mises en oeuvre à une température relativement élevée, de l'ordre de 110 à 140°C. De façon à assurer au joint ou au garnissage une compacité et une étanchéité suffisantes, il faut déposer la pâte par couches successives de 15 à 20 centimètres d'épaisseur au maximum et tasser chaque couche au moyen d'une dame ou d'une pilonette montée sur un appareil pneumatique à percussion. Ce travail est effectué manuellement et il est souvent pénible pour le personnel d'exécution, en raison des vibrations, ainsi que de la chaleur et des dégagements de goudrons et de fumées. Or, la durée de vie d'une cuve d'électrolyse pour la fabrication d'aluminium, par exemple, est étroitement liée au soin avec lequel ont été réalisés les joints entre les blocs de cathodes. Le problème se pose donc de mécaniser l'opération de compactage des pâtes carbonées, à la fois pour le confort du personnel, et pour la régularité et la qualité des joints ou des garnissages.

Il est connu, notamment par les brevets français 2 236 654 et 2 017 343 de compacter des blocs d'anodes destinées aux cuves d'électrolyse ignée pour la fabrication d'aluminium, dans des presses où l'on exerce, sur la pâte carbonée, une forte pression statique combinée avec une vibration. Mais, d'une part, il s'agit de machines fixes conçues pour produire en série des pièces moulées de formes et de dimensions invariables, et d'autre part, l'essentiel du travail de compactage est effectué par la forte pression statique, les vibrations n'étant qu'un moyen de ficiliter le remplissage du moule.

La présente invention concerne un appareil pour le compactage des pâtes carbonées mises en forme à chaud ou à froid, caractérisé en ce qu'il comporte un générateur de vibrations d'amplitude comprise entre 1 et 50 mm, un moyen pour transmettre les vibrations et la poussée à la pâte carbonée. Il comporte également un générateur de pression statique, dont l'effet se combine à celui des vibrations pour assurer le compactage. La poussée statique et la composante principale des vibrations doivent être dirigées dans le sens du compactage ou dans une direction voisine. Elles sont transmises à la pâte à compacter au moyen d'un outil, généralement appelé dame, dont la forme et les dimensions sont adaptées à la forme et aux dimensions de garnissage à réaliser. L'appareil comprend, en outre, des moyens pour le déplacer et l'orienter dans toutes les positions de l'espace nécessitées par les opérations de compactage.

L'appareil peut également comporter différents dispositifs annexes tels qu'une alimentation automatique en pâte carbonée et un moyen pour programmer son déplacement automatique, par exemple le long des différents joints ou garnissages à exécuter dans chaque type de four métallurgique.

Les figures qui suivent décrivent la structure de l'appareil.

La figure 1 est un schéma d'ensemble de l'appareil, monté sur une poutre roulante au-dessus d'un four où l'on exécute des joints en pâte carbonée.

La figure 2 montre la fixation d'une dame de compactage pour exécuter un joint étroit.

La figure 3 montre un type de dame pour joint large.

Le compacteur (1) est constitué par un caisson métallique dans lequel est placé un dispositif générateur de vibrations. Parmi tous les moyens possibles pour produire des vibrations, le moteur à balourd exentré s'est révélé particulièrement pratique, éconimique et robuste. Il peut être actionné, par exemple, par l'électricité ou l'air comprimé.

Le moteur à balourd exentré est disposé de façon telle que son axe de rotation soit dans un plan sensiblement horizontal. Si l'on veut obtenir un meilleur équilibrage, on peut utiliser deux moteurs à balourd exentré dont les sens de rotation sont inversés et les rotations synchronisées de façon que les deux balourds puissent passer simultanément — ou non — au point haut et au point bas. La composante vibratoire latérale peut ainsi être ajustée à une valeur moyenne, faible ou nulle. Le même résultat peut être obtenu à partir d'un seul moteur entraînant deux balourds synchronisés, tournant en sens inverse comme ci-dessus.

D'autres types de générateurs de vibrations peuvent être mis en oeuvre sans sortir du cadre de l'invention, par exemple, un génératur à effet magnétostrictif, ou un vibreur pneumatique.

Quels que soient l'origine et le mode de production des vibrations, il est apparu que les meilleurs résultats étaient obtenus lorsque l'amplitude maximale des mouvements vibratoires, mesurée de crête à crête, ne dépassait pas 50 mm, et de préférence, était comprise entre 1 et 10 mm. Au-delà de ce chiffre, on ne peut plus considérer qu'il s'agit, à proprement parler, de vibrations mais de chocs répétés dont l'efficacité est insuffisante pour assuerer le compactage optimal.

Le compacteur (1) est monté à l'extrémité d'un bras de suspension (2) fixé à l'extrémité d'une potence (3) mobile autour d'un axe vertical (4). La poussée statique est assurée par le vérin (5). L'inclinaison du compacteur est réglable, par exemple, par vérin rotatif à double effet, ou tout autre moyen connu.

La poignée (14) permet à l'opérateur de guider les mouvements et de faciliter la mise en place de l'appareil au vineau du joint.

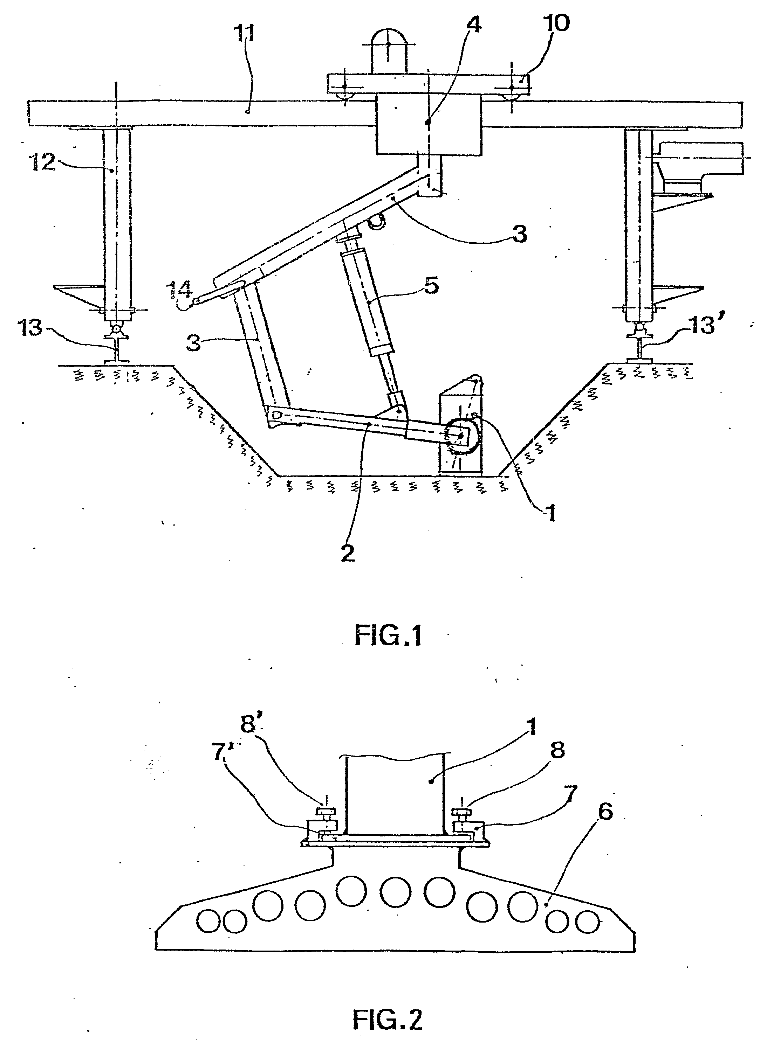

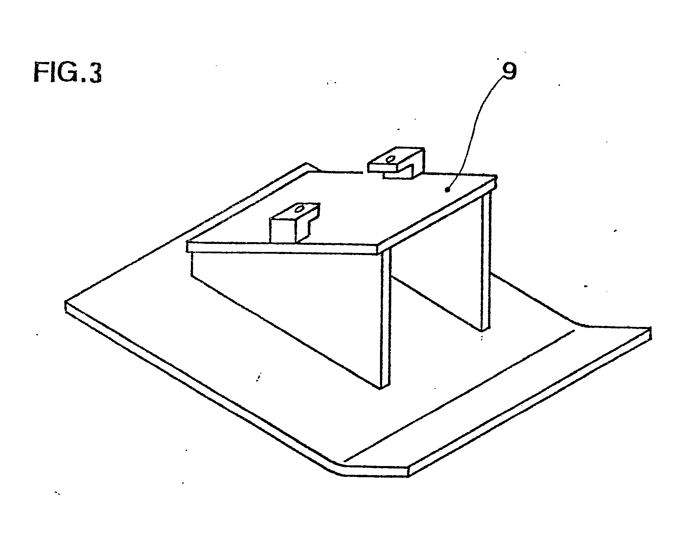

L'outil de compactage ou »dame« qui doit être interchangeable pour s'adapter à la forme et à la dimension du joint ou du garnissage à réaliser, transmet l'énergie vibratoire et la poussés statique à la pâte. Il est fixé de façon amovible sous le compacteur. La dame (6), figure 2, est adaptée à un joint long et étroit. Elle est ajourée pour diminuer son poids de façon à transmettre correctement les vibrations. Elle est fixée par deux étriers (7, 7') disposés symétriquement sur les côtés du compacteur, et par des vis de serrage (8, 8') sur la semelle du compacteur. La dame (9), figure 3, est adaptée au damage d'un »talus«, c'est-à-dire de la partie inclinée qui raccord le fond d'une cuve d'électrolyse aux parois latérales verticales.

Le dispositif de suspension et de déplacement de l'appareil peut être de tout type connu. Celui qui est représenté sur la figure 1, n'est qu'un exemple de réalisation particulière adaptée à une cuve d'électrolyse. Il comporte un chariot (10) mobile sur la poutre horizontale (11) d'un portique (12) se déplaçant sur des rails (13, 13') disposés le long de la cuve d'électrolyse ou de la série de cuves, s'il y a lieu.

Exemple de réalisation et de mise en oeuvre

On a réalisé un appareil de compactage, conforme à l'invention, comportant:

— un compacteur (1) constitué par un moteur pneumatique tournant à 3000 tours/minute lorsqu'on l'alimente en air comprimé sous 6 bars, et entraînant en rotation un balourd de 4 kg excentré de 3 centimètres. Le poids total du compacteur est de 100 kg et l'amplitude de vibrations est de 3 à 10 millimètres.
— le vérin (5) exerce sur le compacteur une poussée réglable entre 1000 et 20 000 daN. La potence de suspension (3) est reliée au chariot de direction (10) par une couronne à galets croisés qui permet d'obtenir sa rotation sur 360°. Il est muni d'un dispositif de blocage pour maintenir l'appareil dans une direction fixe.
— le chariot de direction (10) roulant sur les traverses du portique est muni de roues en silicone pour amortissement des vibrations, est entraîné, à l'aide d'un dispositif à crémaillère, par un moto-réducteur pneumatique (sous 4,5 bars, 0,5 kW et 2600 t/min assurant une vitesse de déplacement de 9 m/min. Le moteur est muni de freins pour mantenir le chariot en place lors du damage.
— le portique se déplaçant sur les rails (13, 13') disposés le long de la cuve est entraîné par un moto-réducteur pneumatique identique à celui du charit de direction. Les roues de ce portique sont motrices de chaque cônté pour éviter la marche »en crabe« et la vitesse de translation est de 9 m/min.
— dispositif de commande: toutes les manettes de commande des différents organes, portique, chariot, compacteur (vibration) et vérins de montée-descente et d'inclinaison, sont regroupés au niveau de la potence, à hauteur d'homme.

Les déplacements du portique et du chariot sont ramenés sur une seule manette qui permet de transmettre les ordres soit au portique, soit au chariot, de façon à déplacer le compacteur, quelle que soit l'orientation de la potence (3), dans le sens du mouvement imprimé à la manette. Ce dispositif de commande peut être reporté hors de la cuve et reliée à la machine par un système de télécommande.

— les pressions mises en jeu varient selon la dimension de l'outil et de la pression exercée sur le vérin (5).

De façon à tester la qualité des joints obtenus avec l'appareillage, on a réalisé en braie grandeur, une série de joints, en pâte de brasque, entre les blocs de carbone destinés à former le fond d'une cellule d'électrolyse ignée pour la produktion d'aluminium.

Les joints à réaliser avaient une longueur de 2,36 m, une largeur de 40 mm et une profondeur de 450 mm.

La confection du joint a été réalisée en quatre couches successives avec une dame de 2,35 mètres de long.

On a disposé, d'abord, une couche de pâte carbonée de 20 cm de hauteur environ, mis en place la dame, puis compacté avec vibration et pression statique pendant 45 secondes. De la même façon, on a placé, puis tassé et compacté une deuxième, une troisième et une quatrième couche de pâte juscu'à ce que le niveau do joint corresponde à la hauteur des blocs de carbone à assembler.

Le joint, refroidi, a été démonté et, sur des échantillons prélevés à divers niveaux et à différents emplacements, le long du joint, on a trouvé une densité comprise entre 1,52 et 1,56, ce qui indique une excellente homogénéité. Le taux de compactage (rapport entre le volume de la pâte compactée et la pâte brute) est de l'ordre de 45% et peut atteindre et même dépasser 50%, ce qui est très satisfaisant.

On n'a observé aucun collage de pâte sur les dames, même avec une pâte surchauffée et aucune remontée de pâte de part et d'autre de l'outil lors du compactage.

De nombreux essais analogues ont été réalisés avec le même succès sur différents types de cuves d'électrolyse. Ils ont confirmé que la machine, objet de l'invention, pouvait réaliser la totalité des joints de cathode d'une cuve moyennant un simple changement de dame.

En outre, la machine se prête particulièrement bien à la confection de garnissage de fours métallurgiques réalisés partiellement ou totalement à partir de pâtes carbonées. Elle peut comporter, additionnement, un distributeur de pâte constitué par un réservoir éventuellement chauffé et/ou calorifugé et une vis sans fin ou tout autre dispositif permettant d'introduire la pâte dans le joint à réaliser ou sur l'emplacement à revêtir.

Il est également possible de télécommander ou d'automatiser entièrement son fonctionnement, ce qui est particulièrement intéressant lorsqu'il s'agit d'effectuer, par exemple, des joints sur une série de cuves d'électrolyse comportant plusieurs dizaines d'unités identiques.

Dans ce dernier cas, la commande est alors assurée à partir d'un automate programmable, comportant dans une mémoire la position et la dimension des différents joints et des différentes cuves, qui agit, à la fois, sur les déplacements du compacteur, l'alimentation en pâte et la mise en marche et l'arrêt du compactage.

## Revendications

1. Appareillage destiné au compactage des pâtes carbonées, dans les garnissages des fours métallurgiques et électrométallurgiques, caractérisé en ce qu'il comporte un générateur de vibrations d'amplitude comprise entre 1 et 50 mm, un moyen pour transmettre les vibrations à la pâte carbonée et un moyen de génération de pression statique dont la poussée est dirigée dans le sens du compactage, coopérant pour assurer le compactage, ainsi que des moyens pour déplacer et orienter ledit appareillage dans toutes les positions de l'espace nécessitées par les opérations de compactage.

2. Appareillage destiné au compactage des pâtes carbonées selon la revendication 1, caractérisé en ce que l'amplitude des vibrations est comprise de préférence entre 1 et 10 mm.

3. Appareillage destiné au compactage des pâtes carbonées selon la revendication 1 ou 2, caractérisé en ce que le moyen pour transmettre les vibrations et la poussée statique est un outil relié au générateur de vibrations dont la forme et les dimensions sont adaptées à la forme et aux dimensions de l'espace où l'on effectue le compactage et au profil du garnissage de pâte carbonée que l'on veut réaliser.

4. Appareillage destiné au compactage des pâtes carbonées selon la revendication 1 ou 2, caractérisé en ce que le générateur de vibrations comporte au moins un moteur entraînant en rotation au moins un balourd exentré.

5. Appareillage destiné au compactage des pâtes carbonées selon la revendication 1 ou 2, caractérisé en ce que le générateur de vibrations comporte au moins un moteur entraînant en rotation deux balourds excentrés, synchronisés tournant en sens inverse, les deux balourds pouvant passer simultanément au point haut et au point bas.

6. Appareillage destiné au compactage des pâtes carbonées selon l'une quelconque des revendications précédentes, caractérisé en ce qu'il comporte, en outre, un distributeur de pâte carbonée.

7. Appareillage destiné au compactage des pâtes carbonées selon l'une quelconque des revendications précédentes, caractérisé en ce que son fonctionnement et ses déplacements sont télécommandés à partir d'un pupître indépendant de la machine.

8. Appareillage destiné au compactage des pâtes carbonées selon l'une quelconque des revendications précédentes, caractérisé en ce que son fonctionnement et ses déplacements sont télécommandés par un automate programmable dans lequel on a mémorisé la position et la forme des opérations de compactage à réaliser.

## Patentansprüche

1. Vorrichtung zum Verdichten von kohlenstoffhaltigen Massen in den Auskleidungen von metallurgischen und elektrometallurgischen Öfen, gekennzeichnet durch einen Erzeuger von Schwingungen mit Amplituden von 1 bis 50 mm, durch eine Einrichtung zum Übertragen der Schwingungen auf die kohlenstoffhaltige Masse, durch eine Einrichtung zum Erzeugen eines statischen Drucks, dessen Schub in Richtung der Verdichtung geleitet wird, die zum Herbeiführen der Verdichtung zusammenarbeiten, und durch eine Einrichtung zum Verschieben und Ausrichten der Vorrichtung in allen Stellen des Raums, die von den Verdichtungsvorgängen benötigt werden.

2. Vorrichtung zum Verdichten von kohlenstoffhaltigen Massen nach Anspruch 1, dadurch gekennzeichnet, daß die Amplitude der Schwingungen vorzugsweise 1 bis 10 mm beträgt.

3. Vorrichtung zum Verdichten von kohlenstoffhaltigen Massen nach Anspruch 1 oder 2, dadurch gekennzeichnet, daß die Einrichtung zum Übertragen der Schwingungen und des statischen Schubs ein mit dem Schwingungserzeuger verbundenes Werkzeug ist, dessen Form und Abmessungen angepaßt sind an die Form und Abmessungen des Raums, in dem das Verdichten erfolgt, und an das herzustellende Profil der Auskleidung aus kohlenstoffhaltiger Masse.

4. Vorrichtung zum Verdichten von kohlenstoffhaltigen Massen nach Anspruch 1 oder 2, dadurch gekennzeichnet, daß der Schwingungserzeuger wenigstens einen Motor aufweist, der wenigstens eine exzentrische Unwucht drehend antreibt.

5. Vorrichtung zum Verdichten von kohlenstoffhaltigen Massen nach Anspruch 1 oder 2, dadurch gekennzeichnet, daß der Schwingungserzeuger wenigstens einen Motor aufweist, der zwei exzentrische, synchronisierte und entgegengesetzt rotierende Unwuchten aufweist, wobei die beiden Unwuchten gleichzeitig zur oberen Stelle und zur unteren Stelle gelangen können.

6. Vorrichtung zum Verdichten von kohlenstoffhaltigen Massen nach einem der vorhergehenden Ansprüche, dadurch gekennzeichnet, daß sie außerdem einen Verteiler für die kohlenstoffhaltige Masse aufweist.

7. Vorrichtung zum Verdichten von kohlenstoffhaltigen Massen nach einem der vorhergehenden Ansprüche, dadurch gekennzeichnet, daß ihr Betrieb und ihre Verschiebungen ausgehend von einem von der Maschine unabhängigen Schaltpult ferngesteuert werden.

8. Vorrichtung zum Verdichten von kohlenstoffhaltigen Massen nach einem der vorhergehenden Ansprüche, dadurch gekennzeichnet, daß ihr Betrieb und ihre Verschiebungen durch einen programmierbaren Automaten ferngesteuert werden, in dem die Position und die Form der auszuführenden Verdichtungsvorgänge gespeichert sind.

## Claims

1. Apparatus for compacting carbonaceous pastes in the linings of metallurgical and electrometallurgical furnaces, characterised in that it comprises a generator for generating vibrations of an amplitude of from 1 to 50 mm, a means for transmitting the vibrations to the carbonaceous paste and a means for generating a static pressure, the thrust of which is directed in the direction of compacting, and co-operating to provide the compacting effect, and means for displacing and orienting said apparatus in all positions in space which are required by the compacting operations.

2. Apparatus for compacting carbonaceous pastes according to claim 1 characterised in that the amplitude of the vibrations is preferably from 1 to 10 mm.

3. Apparatus for compacting carbonaceous pastes according to claim 1 or claim 2 characterised in that the means for transmitting the vibrations and the static thrust force is a tool connected to the vibration generator, the shape and dimensions of which are adapted to the shape and dimensions of the space where the compacting operation is effected and the profile of the carbonaceous paste lining which is to be produced.

4. Apparatus for compacting carbonaceous pastes according to claim 1 or claim 2 characterised in that the vibration generator comprises at least one motor for rotating at least eccentric unbalance weight.

5. Apparatus for compacting carbonaceous pastes according to claim 1 or claim 2 characterised in that the vibration generator comprises at least one motor for rotating two eccentric unbalance weights which are synchronised and which rotate in opposite directions, wherein the two unbalance weights can pass through the high point and the low point at the same time.

6. Apparatus for compacting carbonaceous pastes according to any one of the preceding claims characterised in that it further comprises a carbonaceous paste distributor.

7. Apparatus for compacting carbonaceous pastes according to any one of the preceding claims characterised in that operation and movements thereof are remotely controlled from a desk which is independent of the machine.

8. Apparatus for compacting carbonaceous pastes according to any one of the preceding claims characterised in that operation and movements thereof are remotely controlled by an automatic programmable machine in which the position and form of the compacting operations to be performed are stored in a memory.

0 008 561

FIG.1

FIG.2

FIG.3

9